# EUROPEAN PATENT APPLICATION

(11) **EP 2 157 461 A1**
(43) Date of publication of application: **24.02.2010**
(21) Application number: 08014836.4
(22) Date of filing: 21.08.2008
(51) Int. Cl.: G02B 6/44

(54) **Preassembled optical cable and method for manufacturing preassemled optical cables**

(71) Applicant: CCS Technology Inc., Wilmington, DE 19803 (US)
(72) Inventor: Strek, Bartosz, 92-432 Lodz (PL); Mirynowska, Magdalena, 76-200 Slupsk (PL)
(74) Representative: Sturm, Christoph

(57) **Abstract**

The invention relates to a preassembled optical cable comprising a riser cable (11) and at least one tether cable (12) branched off from said riser cable (11); said riser cable (11) comprising: a cable jacket (13) surrounding a plurality of optical fiber bundles (14), wherein each of said optical fiber bundles (14) comprises a buffer tube surrounding a plurality of individual optical fibers; a furcation adapter (15) mounted to an end (16) of said riser cable (11), said furcation adapter (15) splitting out the individual optical fibers of said riser cable (11) in a way that each of said individual optical fibers (17) of said riser cable (11) is surrounded by an individual protection tube (18) and that each of said individual optical fibers (17) of said riser cable (11) can be connected to an optical fiber of a distribution cable; at least two mid span access locations (20), wherein in the region of at least one of these mid span access locations (20) at least one tether cable (12) is branched off from said riser cable (11); each of said tether cables (12) comprising: individual unspliced optical fibers (23) of one unspliced optical fiber bundle (14) of said riser cable (11), each individual optical fiber (23) being surrounded by an individual protection tube (24), whereby each of said individual optical fibers (23) can be connected to an optical fiber of a drop cable.

## Description

The invention relates to a preassembled optical cable, especially to a preassembled indoor optical cable. Further on, the present invention relates to a method for manufacturing preassembled optical cables.

In the world of the ever-increasing need for broadband bandwidth optical cables have become the main part of telecommunication networks. Optical cables can transmit voice signals, data signals and video signals for very long distances with very high speed. Developments of optic telecommunication networks allow the connection of the end user directly to the optical fiber. This kind of network technology known as FTTH technology (fiber to the home) requires extending an "all optical" communication network closer to the subscribers. As a result such telecommunication networks include large number distribution points from a distribution cable to an end user or subscriber.

One of the key parts of the FTTH network is the last mile connection which often is an indoor installation. Different kind of buildings like multi dwelling units and block of flats require complicated cabling systems which might mean that there are many separated cables, each one to connect one subscriber. Installation of many cables which provide the connection between a main distribution point (which usually is located in the basement or in another place of the building) and the end user may cause many problems with routing through the wall or levels of the building. As a result, such installations consume a lot of time and costs.

Another way to provide the connection between the main distribution point and the end user or subscriber is using an optical cable comprising a riser cable with branched off tether cables, whereby the riser cable is to be connected to the main distribution point via a distribution cable, and whereby the tether cables are to be connected to the end users via a drop cables.

Usually, to provide mid span access for branching off tether cables from a riser cable, a highly skilled field technician must remove a piece of a cable jacket of the riser cable in the field at a definite location along the riser cable. In addition the particular, pre-selected optical fiber inside the riser cable must be cut and some length of it must be removed. Removed optical fiber of the riser cable must be optically connected with an optical fiber of a tether cable. This is be done by using standard splicing methods or with field installable connectors. This process often must be performed under field working conditions. It all shows that the process of installation must be done by the highly skilled person. It all increases the total costs of installation.

To decrease the total costs of installation some preassembled optical cables have been developed. Such a preassembled optical cable is known from EP 0 509 299 B1. On one side such preassembled optical cables save costs of the installation, but on the other side the manufacturing process is complicated. In order to reduce both the manufacturing and installation costs there was a unresolved need for a preassembled optical cable that would be easy to manufacture.

Against this background, the present invention is based on the object of providing a novel preassembled optical cable being easy to manufacture and being easy to install in order to reduce costs for manufacturing and costs for installation.

Further on, the present invention is based on the object of providing a novel method for manufacturing preassembled optical cables.

This problem is solved by a preassembled optical cable according to claim 1.

The preassembled optical cable according to the invention comprises a riser cable and at least one tether cable branched off from said riser cable; whereby said riser cable comprises: a cable jacket surrounding a plurality of optical fiber bundles, wherein each of said optical fiber bundles comprises a buffer tube surrounding a plurality of individual optical fibers; a furcation adapter mounted to an end of said riser cable, said furcation adapter splitting out the individual optical fibers of said riser cable in a way that each of said individual optical fibers of said riser cable is surrounded by an individual protection tube and that each of said individual optical fibers of said riser cable can be connected to an optical fiber of a distribution cable; and at least two mid span access locations, wherein in the region of at least one of these mid span access locations at least one tether cable is branched off from said riser cable; and whereby each of said tether cables comprises: individual unspliced optical fibers of one unspliced optical fiber bundle of said riser cable, each individual optical fiber being surrounded by an individual protection tube, whereby each of said individual optical fibers can be connected to an optical fiber of a drop cable.

The invention provides a preassembled fiber optic cable intended to be used as a key part of a cabling system inside a building. As a single optical cable with mid-span access locations along the riser cable it can provide the direct connection between the main distribution point of network and many different subscribers located at the different points of the building.

There are tethers branched off at mid-span access locations of the riser cable to connect the fibers of the drop cables and as a result providing the optical signal to the different subscribers.

The tether cables comprise unspliced optical fiber bundles of said riser cable which allows an easy and quick manufacturing of the optical cable according to the present invention.

The preassembled fiber optic cable according to the present invention consists of two main parts, namely the riser cable and at least one branched off tether cable. The end of the riser cable where the furcation adapter is mounted to the riser cable is the side of the riser cable where the fibers of the riser cable are spilt out into individual fibers, each of them protected by an individual protection tube. At this end all fibers are split out at the single furcation point provided by said furcation adapter. The way this end of the cable is built ensures that the preassembled optic cable can be easily connected to the distribution cable at the main distribution point located at the basement or other side of the building. Another part of the preassembled fiber optic cable comprises at least one tether cable branched off from the riser cable at a mid-span access point for providing connection to at least one optical fiber of a drop cable. Each tether cable is built and attached to the main cable without any process of splicing.

The present invention provides an optic cable that comprises at least one mid-span access location and at least one tether cable for providing access to at least one drop cable. The end of the tether cable might be factory connectorized and provide easy connection to a preconnectorised drop cable but in addition it might be also without fiber optic connectors - fibers of a tether cable could be directly spliced to fibers of drop cables.

It should be noted that at a single mid-span access location more than one tether cable can be build thereby helping to increase the total number of fibers allowing to connect more subscribers at same level of the building. The optical cable according to the present invention makes the process of installation much more easier. That optical cable according to the present invention is fully preassembled.

The way how the optical cable is assembled helps to avoid time-consuming splicing of fibers from the tether cable with fibers from the riser cable accessed at mid-span locations.

The method for manufacturing a preassembled optical cable comprising a riser cable and at least one tether cable branched off from said riser cable is defined in claim 5.

The method comprises at least the following steps: providing a riser cable comprising a cable jacket surrounding a plurality of optical fiber bundles, wherein each of said optical fiber bundles comprises a buffer tube surrounding a plurality of optical fibers; mounting a furcation adapter to one end of said riser cable splitting out the individual optical fibers of said riser cable in a way that each of said individual optical fibers of said riser cable is surrounded by an individual protection tube and that each of said individual optical fibers of said riser cable can be connected to an optical fiber of a distribution cable; opening said cable jacket of said riser cable in the region of at least two positions of said riser cable thereby providing at least two mid span access locations of said riser cable providing access to said optical fiber bundles of said riser cable; cutting at least one of said optical fiber bundles of said riser cable at a first of said mid span access locations and pulling out the cut end of the or each cut fiber bundle through a second of said mid span access locations and pulling unspliced individual optical fibers of said unspliced optical fiber bundles through individual protection tubes.

Preferred developments of the invention are given in the dependent claims and the description below. Exemplary embodiments will be explained in more detail with reference to the drawing, in which:
- figure 1: shows a schematic view of a preassembled optical cable according to the invention;
- figure 2: shows a detail of the preassembled optical cable of figure 1;
- figure 3: illustrates a step of the method for manufacturing a preassembled optical cable;
- figure 4: illustrates another step of the method for manufacturing a preassembled optical cable; and
- figure 5: illustrates another step of the method for manufacturing a preassembled optical cable.

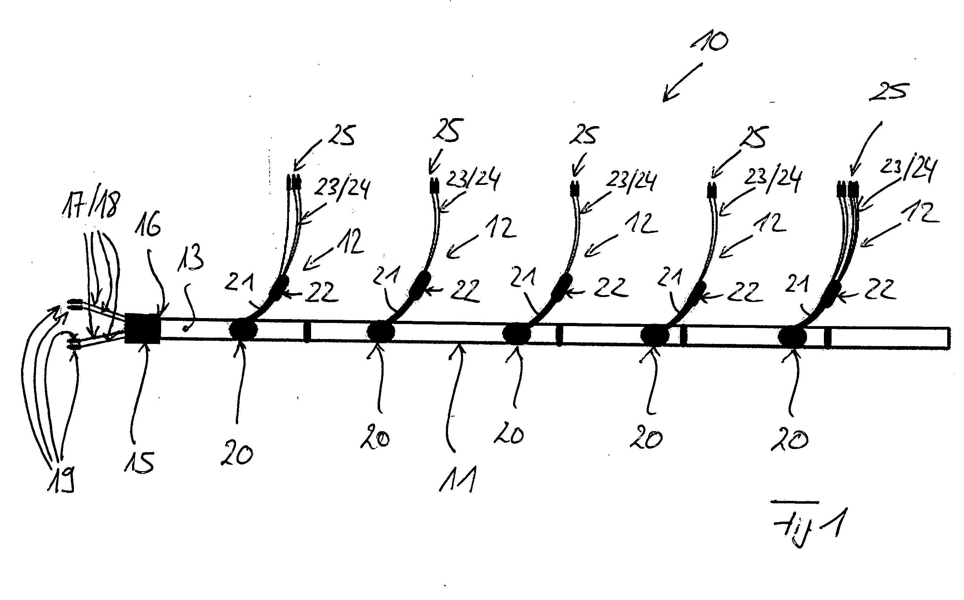

Figure 1 shows a schematic view of a preferred embodiment of a preassembled optical cable 10 according to the invention. The preassembled optical cable 10 comprises a riser cable 11 and at least one tether cable 12 branched off from said riser cable 10. According to the embodiment of figure 1, the preassembled optical cable 10 comprises five tether cables 12.

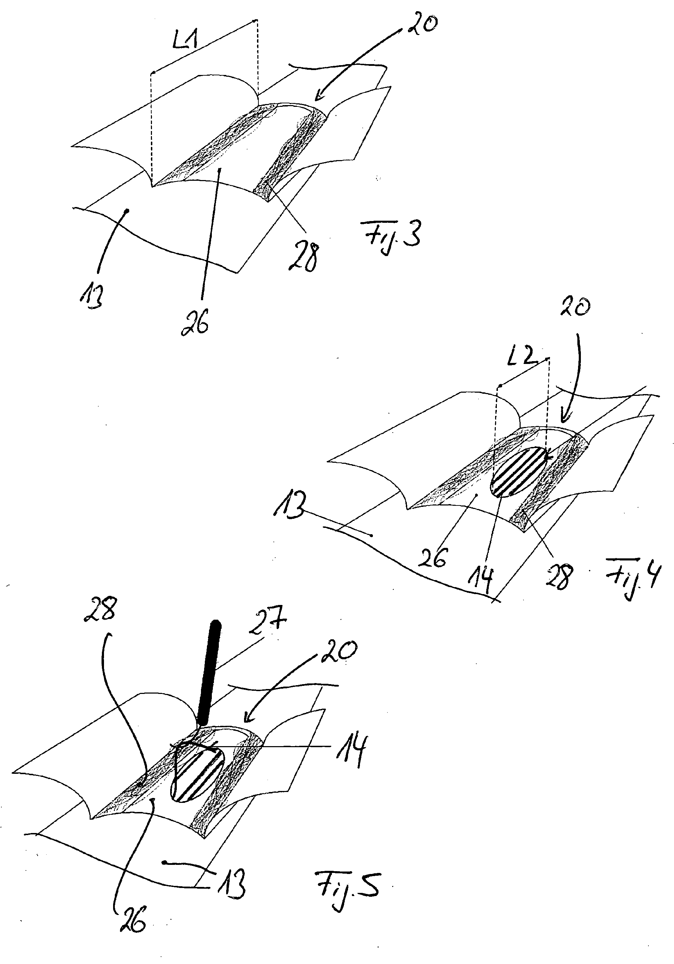

The riser cable 11 comprises a cable jacket 13 surrounding a plurality of optical fiber bundles 14 (see figures 3 and 4), wherein each of said optical fiber bundles 14 comprises a buffer tube surrounding a plurality of individual optical fibers.

The riser cable 11 further comprises a furcation adapter 15 mounted to an end 16 of said riser cable 11, said furcation adapter 15 splitting out the individual optical fibers 17 of said riser cable 11 in a way that each of said individual optical fibers 17 of said riser cable 11 is surrounded by an individual protection tube 18 and that each of said individual optical fibers 17 of said riser cable 11 can be connected to an optical fiber of a distribution cable.

The individual optical fibers 17 of said riser cable 11 are preferably connectorized with fiber optic connectors 19 in order to connect each of said individual optical fibers 17 of said riser cable 11 to an optical fiber of said distribution cable at a main distribution point.

The riser cable 11 further comprises at least two mid span access locations 20, wherein in the region of at least one of these mid span access locations 20 at least one tether cable 12 is branched off from said riser cable 11.

According to the embodiment of figure 1, the preassembled optical cable 10 comprises five mid span access locations, whereby at each mid span access location 20 one tether cable 12 is branched off from said riser cable 11.

Each of said tether cables 12 of the preassembled optical cable 10 comprises one unspliced optical fiber bundle 14 of said riser cable 11 surrounded by an protection tube 21.

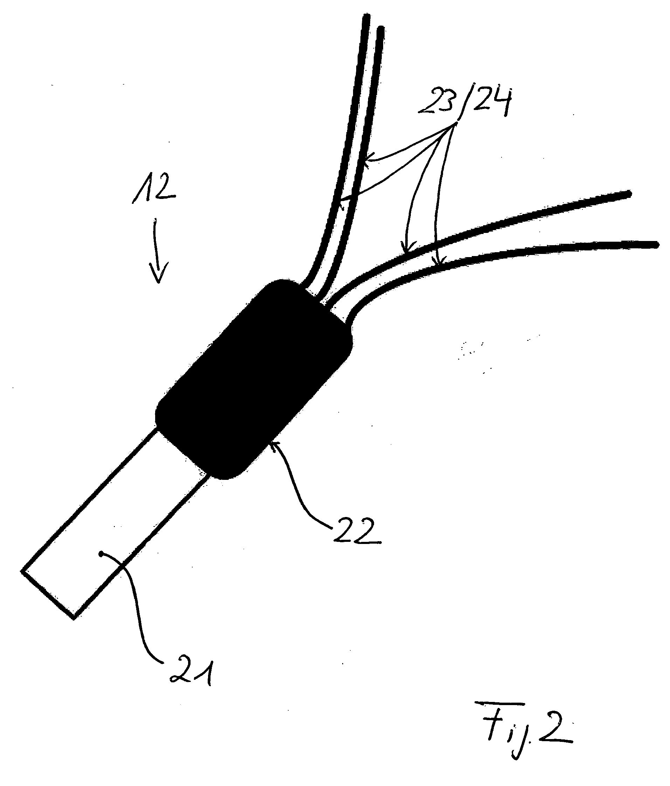

A furcation adapter 22 (see figure 2) is mounted to each tether cable 12, said furcation adapter 22 splitting out the individual optical fibers 23 of each tether cable 12 in a way that each of said individual optical fibers 23 of each tether cable 12 is surrounded by an individual protection 24 tube and that each of said individual optical fibers 23 of each tether cable 12 can be connected to an optical fiber of a drop cable.

The individual optical fibers 23 of each tether cable 12 are preferably connectorized with fiber optic connectors 25 in order to connect each of said individual optical fibers of each tether cable 12 to an optical fibers of a drop cable an thereby to subscribers or end users.

In order to manufacture a preassembled optical cable as shown in figure 1, in a first step a riser cable 11 comprising a cable jacket 13 surrounding a plurality of optical fiber bundles 14 is provided, wherein each of said optical fiber bundles 14 comprises a buffer tube surrounding a plurality of optical fibers.

In a second step a furcation adapter 15 is mounted to one end 16 of said riser cable 11 splitting out the individual optical fibers 17 of said riser cable 11 in a way that each of said individual optical fibers 17 of said riser cable 11 is surrounded by an individual protection tube 18 and that each of said individual optical fibers 17 of said riser cable 11 can be connected to an optical fiber of a distribution cable.

Preferably, the individual optical fibers 17 of said riser cable 11 are connectorized with fiber optic connectors 19 in order to connect each of said individual optical fibers 17 of said riser cable 11 to an optical fiber of said distribution cable.

In a third step the tether cables 12 are branched off from said riser cable 10 in the region of said mid span access locations 20. This is achieved by opening said cable jacket 13 of said riser cable 11 in the region of said mid span access locations 20 (see figures 3, 4) providing access to said optical fiber bundles 14 of said riser cable 11 (see figure 4), and by cutting at least one of said optical fiber bundles 14 of said riser cable 11 at a first of said mid span access locations 20, and by pulling out the cut end of the or each cut fiber bundle 14 through a second of said mid span access locations 20 (see figure 5), and by pulling each cut fiber bundle 14 through a protection tube 21 thereby providing the tether cables 12.

When creating said mid span access locations 20 along the riser cable 11 the cable sheath 13 has to be open (see figure 3). The length L1 of the cutting the cable sheath 13 is preferably 5 cm. After the cable sheath 13 is cut then it is opened to expose the optical fiber bundles 14. To be sure that the cable sheath 13 will be easy to open a stream of hot air having a temperature of preferably 150 °C is applied. It helps to open the cable sheath 13.

In case the optical fiber bundles 14 of the riser cable 11 are surrounded by a tubular body 26 (see figures 3, 4, 5) of the riser cable 11, the tubular body 26 has to be opened in order to allow access to the optical fiber bundles 14. The removed length L2 of such a tubular body 26 of the riser cable 11 is preferably 3cm. This allows accessing the optical fiber bundles 14.

It should be noted that the invention is not restricted to riser cables 11 having a tubular body 26 surrounding the optical fiber bundles 14. According to figures 3 to 5, kevlar yarn 28 is positioned between the tubular body 26 and the cable sheath 13.

Before the appropriate length of an optical fiber bundles 14 can be pulled out from the a mid span access location 20, the respective optical fiber bundle 14 has to be cut at an adjacent mid span access location 20 spaced apart along the riser cable 11. The distance between the adjacent mid span access locations 20 should be equal to the length of the tether cable to be provided. The length may vary; usually it is 2 or 3 meters.

The process of pulling out the optical fiber bundle 14 from the riser cable 11 can be done using any small, non sharp element 27 like a piece of plastic part to avoid damaging the fibers inside the optical fiber bundle 14 (see figure 5). When the chosen length of the optical fiber bundle 14 is pulled out of the riser cable 11 then the optical fiber bundle 14 (comprising individual optical fibers 23) is pulled through the protection tube 21 up to the point where the tubular body 26 is removed. To protect the optical fiber bundle 14 at the point where tubular body 26 is opened and to seal the opening of the tubular body 26 a silicon material is applied. Then kevlar from the protection tube 21 is evenly flare on the tubular body 26 and glued to it. After that a small amount of liquid silicon material is applied again. For better protection a ring made of a flexible tube is pulled over the opening of the tubular body 26 and glue to it. Then again, the silicon liquid is applied over the full length of the cable jacket 13 opening. To protect the mid-span location 20 a piece of a spiral wrap can be wrapped around the mid-span location 20. A shrink tube is shrinked over the spiral wrap.

In a fourth step a furcation adapter 22 is mounted to each tether cable 12 splitting out the individual optical fibers 23 of each tether cable 12 in a way that each of said individual optical fibers 23 of each tether 12 cable is surrounded by an individual protection tube 24 and that each of said individual optical fibers 23 of each tether cable 12 can be connected to an optical fiber of a drop cable. Preferably, individual optical fibers 23 of each tether cable 12 are connectorized with fiber optic connectors 25 in order to connect each of said individual optical fibers of each tether cable 12 to an optical fibers of a drop cable.

In order to achieve a well protected furcation point in the region of the furcation adapters 22 mounted to each tether cable 12, the buffer tube of the optical fiber bundle 14 is removed from that point to the end of the tether cable 12. Then a piece of the silicon tube known as a transition piece is applied. The silicon tube is pulled over the bare fibers the way that a predetermined length of the protection tube 21 is inserted into the smaller side of the transition piece tube. To protect the individual fibers 23 the individual protection tubes 24 are provided. To group them together a small piece of the heat shrink is used. The number of individual protection tubes 24 is equal to the number of fibers 23 to be protected. Each individual fiber 23 is slide into an individual protection tube 24 and finally the end of the whole bundle is inserted into the bigger side of the transition piece tube. Kevlar from the protection tube 21 is evenly flared around the transition piece and glued to it. Another piece of the heat shrink is slide over the furcation point 22 and shrinks down.

There is another way to build tether cables at the mid-span access locations. A tether cable could be built using single protection tubes for each individual fiber of each fiber bundle 14 which is split out directly at the mid-span access location 20 or more detailed at the opening of the tubular body 26 of the riser cable 11. As a result there is no furcation point 22 along the tether cable 12 where the fibers are split out into individual fibers. The tether cable is a bundle of the individual fibers, each of them protected by the individual protection tubes, which goes directly from the mid-span access location20. In that case the buffer tube of the fiber bundle 14 which was pulled out of the riser cable is removed along its whole length - directly from the opening of the tubular body 26 to the end of the fiber bundle 14 which was pulled-out. To protect the fibers the bundle of single protection tube is created. To bundle them together a transition element is created, namely a piece of a silicon tube which also ensure both the smooth transition and protection of the bare fibers on the short distance where the fibers do not have any protection tube. The first ends of the protection tubes are evenly stick to the inner side of the transition element. The number of the individual protection tubes is equal to the number of the fibers which are spilt out. The individual bare fibers are then slide into the individual protection tubes. The transition element is pulled over the opening of the tubular body. To protect the bare fibers and fiber bundles 14 at the point where the tubular body is opened a liquid silicon material is applied. Finally, the mid-span access location point 20 is encapsulated using the spiral wrap and heat shrink.

The invention gives the possibility of providing easy connection of the end users to the fiber optic telecommunication network inside the building. As a single element of the cabling system it can easily provide the direct optical connection between the main distribution point of the optical network and many different subscribers of the optical signals located at the different parts and levels of the multi dwelling unit or block of flats building. The invention is a single cable with a plurality of mid-span access location points along the cable at spaced apart, each one of them with a tether cabling, helps to decrease the total time of installation the indoor Fiber To The Home network where the invention can be implemented and where is intended to be used. Each individual fiber of the tether cable at the mid-span location can be easily optically connected to a drop cable. As the pre-assembled solution which can work with the factory installed connector performance it works as a "plug & play" system and gives an opportunity to quickly connection of the end user with the fiber channel. It causes that the installation process can be done by the low-skilled person without any special tools. It decrease the costs of the installation. Due to fact, that it is a single cable and comparing to the other assemblies or solutions its outer diameter, including also the mid-span points, is small, it helps to save the space inside a conduit and could be installed through conduits with small inner diameter. In addition, the described product is designed the way to be slim and flexible. As a result, it can be also easy to route through the conduit, walls or levels of the buildings and can be easily wound onto the reel. The way the invention is designed ensures that the factory process of assembling does not include the time-cost and complicated elements like optical splicing and can be done by non high-skilled person. Also the process of the encapsulating the mid-span access location is easy and time-cost safety. In effect, the total cost of the manufacturing is reduced.

### List of reference numerals

- 10: preassembled optical cable
- 11: riser cable
- 12: tether cable
- 13: cable jacket
- 14: optical fiber bundle
- 15: furcation adapter
- 16: end
- 17: individual optical fiber
- 18: individual protection tube
- 19: fiber optic connector
- 20: mid span access location
- 21: protection tube
- 22: furcation adapter
- 23: individual optical fiber
- 24: individual protection tube
- 25: fiber optic connector
- 26: tubular body
- 27: element
- 28: kevlar yarn

## Claims

1. A preassembled optical cable comprising a riser cable (11) and at least one tether cable (12) branched off from said riser cable (11); said riser cable (11) comprising:
a cable jacket (13) surrounding a plurality of optical fiber bundles (14), wherein each of said optical fiber bundles (14) comprises a buffer tube surrounding a plurality of individual optical fibers;
a furcation adapter (15) mounted to an end (16) of said riser cable (11), said furcation adapter (15) splitting out the individual optical fibers of said riser cable (11) in a way that each of said individual optical fibers (17) of said riser cable (11) is surrounded by an individual protection tube (18) and that each of said individual optical fibers (17) of said riser cable (11) can be connected to an optical fiber of a distribution cable;
at least two mid span access locations (20), wherein in the region of at least one of these mid span access locations (20) at least one tether cable (12) is branched off from said riser cable (11);
each of said tether cables (12) comprising:
individual unspliced optical fibers (23) of one unspliced optical fiber bundle (14) of said riser cable (11), each individual optical fiber (23) being surrounded by an individual protection tube (24), whereby each of said individual optical fibers (23) can be connected to an optical fiber of a drop cable.

2. The preassembled optical cable as claimed in claim 1, wherein each of said tether cables (12) comprises one unspliced optical fiber bundle (14) of said riser cable (11) surrounded by an protection tube (21); and a furcation adapter (22) mounted to each tether cable, said furcation adapter (22) splitting out the individual optical fibers of each tether cable (12) in a way that each of said individual optical fibers (23) of each tether cable (12) is surrounded by an individual protection tube (24) and that each of said individual optical fibers (23) of each tether cable (12) can be connected to an optical fiber of a drop cable.

3. The preassembled optical cable as claimed in claim 1 or 2, wherein said individual optical fibers (17) of said riser cable (11) are connectorized with fiber optic connectors (19) in order to connect each of said individual optical fibers (17) to an optical fiber of said distribution cable.

4. The preassembled optical cable as claimed in one of claims 1 to 3, wherein said individual optical fibers (23) of each tether cable (12) are connectorized with fiber optic connectors (25) in order to connect each of said individual optical fibers of each tether cable to an optical fibers of a drop cable.

5. A method for manufacturing a preassembled optical cable comprising a riser cable and at least one tether cable branched off from said riser cable, the method comprising the following steps:
providing a riser cable comprising a cable jacket surrounding a plurality of optical fiber bundles, wherein each of said optical fiber bundles comprises a buffer tube surrounding a plurality of optical fibers;
mounting a furcation adapter to one end of said riser cable splitting out the individual optical fibers of said riser cable in a way that each of said individual optical fibers of said riser cable is surrounded by an individual protection tube and that each of said individual optical fibers of said riser cable can be connected to an optical fiber of a distribution cable;
opening said cable jacket of said riser cable in the region of at least two positions of said riser cable thereby providing at least two mid span access locations of said riser cable providing access to said optical fiber bundles of said riser cable;
cutting at least one of said optical fiber bundles of said riser cable at a first of said mid span access locations and pulling out the cut end of the or each cut fiber bundle through a second of said mid span access locations and pulling unspliced individual optical fibers of said unspliced optical fiber bundles through individual protection tubes.

6. The method as claimed in claim 5, wherein a cut fiber bundle being pulled out through the second of said mid span access locations is pulled through a protection tube for said fiber bundle thereby providing a tether cable, and wherein a furcation adapter is mounted to each tether cable splitting out the individual optical fibers of each tether cable in a way that each of said individual optical fibers of each tether cable is surrounded by an individual protection tube and that each of said individual optical fibers of each tether cable can be connected to an optical fiber of a drop cable.

7. The method as claimed in claim 5 or 6, wherein the distance between two adjacent mid span access locations corresponds to the maximum length of a tether cable being provided by cutting one of said optical fiber bundles of said riser cable at a first of said two adjacent mid span access locations and by pulling out the cut end of the cut fiber bundle through a second of said two adjacent mid span access locations and by pulling the cut fiber bundle through a protection tube.

8. The method as claimed in one of claims 5 to 7, wherein each mid span access location is sealed by applying sealing means surrounding the mid span access location.

9. The method as claimed in one of claims 5 to 8, comprising the step of mounting connectors to said individual optical fibers of said riser cable.

10. The method as claimed in one of claims 5 to 9, comprising the step of mounting connectors to said individual optical fibers of each tether cable.
